# EUROPÄISCHE PATENTSCHRIFT

(11) **EP 0 849 703 B1**
(45) Veröffentlichungstag und Bekanntmachung des Hinweises auf die Patenterteilung: **30.03.2005**
(21) Anmeldenummer: 97122217.9
(22) Anmeldetag: 17.12.1997
(51) Int. Cl.: G06K 19/077, G06K 7/10, G06K 19/07, G06K 19/00

(54) **Mobiler, maschinell lesbarer Informationsträger**
Mobile information carrier readable by machine
Support d'informations mobile lisible mécaniquement

(30) Priorität: 20.12.1996 DE 19653409
(43) Veröffentlichungstag der Anmeldung: 24.06.1998
(73) Patentinhaber: Giesecke & Devrient GmbH, 81677 München (DE)
(72) Erfinder: Weber, Claudia, 35418 Buseck (DE)
(74) Vertreter: Höhfeld, Jochen

(56) Entgegenhaltungen:
- EP-A- 0 640 940
- EP-A- 0 646 983
- EP-A- 0 676 716
- DE-A- 3 928 573
- DE-A- 4 205 556
- US-A- 4 582 985
- US-A- 5 274 221
- US-A- 5 448 110

## Beschreibung

Die Erfindung betrifft einen mobilen, maschinell lesbaren Informationsträger, welcher ohne interne Energiequelle kontaktlos mit Hilfe hochfrequenter elektromagnetischer Wellen zwecks Energie- und bidirektionaler Informationsübertragung mit einem externen Gerät zusammenwirkt und der eine Antenne und ein nachgeschaltetes Interface enthält, welches ausgangsseitig mittels Energieflußleitung über ein Spannungserzeugungssystem auf die Verarbeitungssysteme sowie mittels Informationsflußleitung auf die Verarbeitungssysteme geführt ist, die als Modulations-/Demodulationsschaltung, Eingabe-/Ausgabe-Steuerschaltung, Steuerung/Prozessor, Speicherschaltungen u. dgl. ausgeführt sind.

Anwendbar ist die Erfindung insbesondere im Zusammenhang mit codierten Identitäts- oder Kreditkarten, sogenannten smart cards, die mit Schreib-/Lesegeräten kontaktfrei über auch größere Entfernungen zusammenarbeiten zwecks Einsatzes als Identifikationsmittel und/oder als Kredit- bzw. Zahlungsmittel bei Einlaß- bzw. Anwesenheitskontrollen. Prüfung der Autorisation von Handlungen, Bezahlungen von Waren und Dienstleistungen, Beschaffung von Bargeld, ohne auf diese Anwendungen beschränkt zu sein.

Dazu verfügen derartige Informationsträger u. a. über eine zum Teil erhebliche Speicherkapazität, die mit dem Schreib-/Lesegerät kontaktlos dergestalt zusammenwirkt, daß sowohl Speicherinhalte ausgelesen als auch neu beschrieben werden können.

In der US-PS 5 241 160 sind entsprechende mobile Datenträger und ihre Zusammenarbeit mit einer Station beschrieben.

Auch in der Firmendruckschrift Kontaktlose Karten" von ODS R. Oldenbourg Datensysteme GmbH, München, (Ausgabe CEBIT April 1996) sind wie vorbeschrieben aufgebaute Karten als bekannt dargestellt. Sie sind im wesentlichen durch eine Energie- und bidirektionale Informationsübertragung mit Hilfe hochfrequenter elektromagnetischer Wellen zwischen dem Schreib-/Lesegerät und der Karte gekennzeichnet, wodurch die Durchführung des Schreib-/Lesevorgangs auch über eine größere Distanz ermöglicht wird. Dieses ist besonders vorteilhaft im oben genannten Anwendungsbereich, da z. B. verschmutzte Karten, Relativbewegungen zwischen Karte und Lesegerät, Zeitbedarf beim Einführen der Karte in das Lesegerät und dergleichen nicht mehr zu Störungen bzw. Behinderungen führen können.

Jedoch kann der entsprechende Informationsaustausch - im Gegensatz zu Karten, die bewußt in ein Lesegerät eingeführt werden müssen (z. B. kontaktbehaftete Karten oder mit geringen Lesereichweiten ablesbare kontaktlose Karten, wie beispielsweise solche mit induktiven und/oder kapazitiven Übertragungssystemen) - durchaus unbemerkt und unbeeinflußt durch den Kartenbesitzer erfolgen. Im Extremfall ist dem Kartenbesitzer das jeweilige Vorhandensein eines Schreib-/Lesegeräts nicht bekannt und es erfolgt ein entsprechender Datentransfer unabhängig vom Willen des Kartenbesitzers. Damit ist Mißbrauch möglich.

Neben Lösungen, die mittels der Verwendung von Schlüssel- oder Paßwörtern und/oder mit Hilfe anderer Softwareanwendungen die mißbräuchliche Nutzung derartiger Informationsträger zu verhindern suchen, sind auch Schaltungsrealisierungen bekannt:

Aus DE-OS 41 20 265 ist es bereits bekannt, eine kontaktlose Karte mit einer Taktunterbrechungsschaltung auszustatten, um die Erzeugung des Taktes für den Betrieb der karteninternen elektronischen Verarbeitungssysteme von außen zu unterbrechen. Aus DE-OS 41 31 222 ist weiterhin eine kontaktlose Karte mit einer Unterbrechungseinrichtung bekannt, die einen für den Betrieb einer Demodulationsvorrichtung benutzten Schaltkreisstrom unterbrechen kann.

Beiden Lösungen liegt das Problem zugrunde, die Lebensdauer von in der Karte integrierten Energiequellen zu verlängern, was durch Unterbrechung des Stromverbrauchs einzelner Verbraucher während der Lagerung der Karte erfolgt. Die wahlweise und wechselhafte Ausschaltung der Funktion nach Ingebrauchnahme der Karte ist nicht möglich.

Die Lösung nach DE-OS 42 05 556 schlägt eine Chipkarte mit externem Sicherheitsschalter vor, welcher es gestatten soll, die Elektronik oder Teile der Elektronik per manueller Bedienung ein- oder auszuschalten. Auch diese Lösung geht von einer als Energiequelle auf der Karte befindlichen Stromquelle aus, die nun wahlweise ausgeschaltet werden soll, um eine vom Kartenbesitzer unbemerkte und/oder ungewollte Funktion der Karte zu verhindern.

Allerdings sind dieser Schrift über eine aufgabenhafte Offenbarung hinaus keine näheren Angaben zur konkreten Schaltungsrealisierung entnehmbar Insbesondere sind keine Anregungen zur Realisierung bei Karten ohne integrierte Energiequelle ersichtlich.

Der Erfindung liegt die Aufgabe zugrunde, einen mobilen, maschinell lesbaren Informationsträger der eingangs genannten Art zu schaffen, wobei trotz berührungsloser Energie- und Informationsübertragung zwischen Schreib-/Lesegerät und Informationsträger ein ungewollter bzw. unbemerkter Informationstransfer verhinderbar ist.

Diese Aufgabe wird erfindungsgemäß mit den in den Patentansprüchen 1 bis 4 dargelegten Merkmalen gelöst. Die Ansprüche sind gegen DE-OS 42 05 556 abgegrenzt.

Der erfindungsgemäß ausgestaltete Informationsträger ermöglicht nunmehr ohne den Einsatz aufwendiger Software- bzw. Hardwarelösungen eine hohe Sicherheit beim Gebrauch, so daß mißbräuchliche Benutzung trotz berührungsloser Energie- und Informationsübertragung ausgeschlossen ist. Mit dem im Informationsträger integrierten Schaltersystem kann sowohl die Energieversorgung beim Nichtvorhandensein einer internen Energiequelle als auch die Informationsverarbeitung und -übertragung vom Besitzer nur mit ausdrücklichem eigenen Willen aktiviert bzw. deaktiviert werden. Dabei sind der Informationsaustausch und die Energieversorgung unterbrechbar, so daß weder eine Energieversorgung der elektronischen Schaltungen bzw. Verarbeitungssysteme zwecks Informationsverarbeitung und -speicherung noch ein Informationstransfer mit dem Auslesen von Speicherinhalten und/oder deren Neubeschriftung möglich sind. Das schließt auch die Verhinderung einer vom Besitzer unbemerkten Identifizierung. z. B. aufgrund der charakteristischen Eigenfrequenz der Elektronik des Informationsträgers, ein.

Vorteilhafterweise ist das Schaltersystem von außen manuell betätigbar. In einer anderen zweckmäßigen Variante ist das Schaltersystem durch bestimmte Körperreaktionen aktivierbar, z. B. durch einen innerhalb des Informationsträgers anfallenden Temperaturgradienten, bedingt durch das Anliegen der menschlichen Körperwärme an der Oberfläche des Informationsträgers, oder durch dessen Bewegung mit einer bestimmten Mindestgeschwindigkeit bzw. -beschleunigung. Auch die Ausübung eines bestimmten Drucks durch den Finger des Besitzers, ggf. innerhalb eines abgegrenzten Oberflächenbereiches des Informationsträgers, oder die Beeinflussung eines im Informationsträger integrierten Aufnehmers durch die menschliche Stimme, kann zur Aktivierung des Schaltersystems herangezogen werden. Entsprechendes gilt für die Verwendung des Fingerabdrucks des Besitzers.

Mit diesen Lösungsvarianten ist jeweils eine vom ausdrücklichen Willen des Besitzers abhängige Aktivierung/Deaktivierung des Schaltersystems möglich, ohne daß die Vorteile des berührungslosen, über größere Distanzen erfolgenden Informationsaustausches im Rahmen der eingangs genannten beispielsweisen Anwendungsgebiete entfallen.

In einer weiteren vorteilhaften Variante erfolgt die Betätigung des Schaltersystems bei gleichzeitiger Wirkung von zwei oder mehreren unterschiedlichen Aktivierungen, beispielsweise bei der Kombination von mechanischer Betätigung unter gleichzeitiger Beeinflussung durch die menschliche Stimme, so daß eine noch höhere Sicherheit vor mißbräuchlicher Benutzung des Informationsträgers gewährleistet ist.

Für einen irrtums- und störungssicheren Gebrauch des erfindungsgemäß ausgestalteten Informationsträgers ist es besonders vorteilhaft und wichtig, daß die Stellung des Schaltersystems für den Besitzer ohne weiteres erkennbar ist.

Die Erfindung wird nachfolgend an zwei Ausführungsbeispielen näher erläutert.

In der zugehörigen Zeichnung zeigen:
- Fig. 1: die Schaltungskonfiguration einer kontaktlosen Karte der eingangs genannten Art in einer ersten Ausführungsvariante der Anordnung des erfindungsgemäßen Schaltersystems,
- Fig. 2: die Schaltungskonfiguration eines zweiten Ausführungsbeispiels.

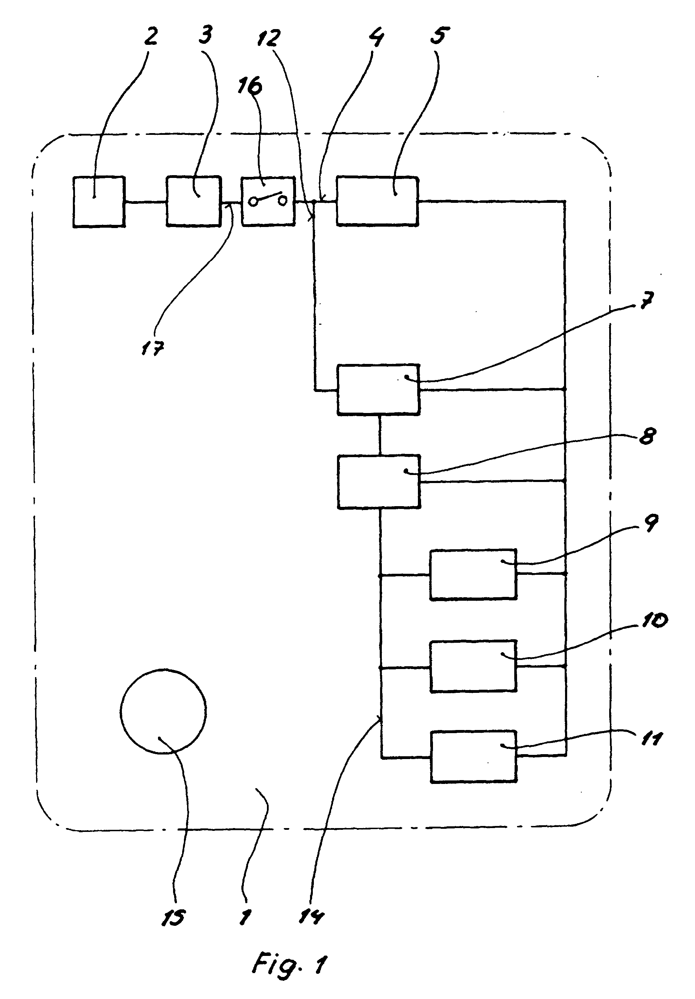

Gemäß dem ersten Ausführungsbeispiel (Fig. 1) besteht die Karte 1 aus einem (nicht dargestellten) Träger aus elektrisch isolierendem Material, in dem die folgende Schaltung integriert ist:

Diese enthält zunächst eine Antenne 2, welche geeignet ist, hochfrequente elektromagnetische Wellen zur Energie- und Informationsübertragung sowohl zu empfangen als auch auszusenden. Diese Antenne 2 ist an ein Hochfrequenz-Interface 3 angeschlossen, welches u. a. eine Tuningschaltung (nicht gezeichnet) enthält. Der Ausgang 17 des Hochfrequenz-Interfaces 3 ist über ein betätigbares Schaltelement 16 auf eine Energieflußleitung 4 und auf eine Informationsflußleitung 12 geführt.

Unter dem Begriff Schaltelement sind dabei die -miniaturisierten- Wirkungselemente des Schaltersystems zur wahlweisen Unterbrechung des Energie- und des Informationssignals zu verstehen, die sowohl kontaktbehaftet als auch kontaktlos sein können.

Die Energieflußleitung 4 führt über ein Spannungserzeugungssystem 5 in Parallelschaltung auf einen Modulator/Demodulator 7 (der einen Analog-Digital-Wandler enthält), auf eine Eingabe-/Ausgabe-Steuerschaltung 8, auf eine Steuerung 9, auf einen Mikroprozessor 10 und auf eine oder mehrere Speicherschaltungen 11.

Die Informationsflußleitung 12 verbindet den Modulator/Demodulator 7 und die nachgeschaltete Eingabe-/Ausgabe-Steuerschaltung 8. Dieser schließt sich ein Bus 14 an für den informationsseitig parallelen Anschluß der Steuerung 9, des Mikroprozessors 10 und der Speicherschaltungen 11.

Das Schaltersystem ist über das Schaltelement 16 hinaus in der Zeichnung nicht dargestellt. Es ist in einer ersten Variante durch einen von außen manuell betätigbaren, miniaturisierten Schalter realisiert, dessen Schaltbereich (Feld 15) zwecks Sichtbarmachung auf der Oberfläche des Informationsträgers/der Karte 1 farblich gekennzeichnet ist (Feld 15). In einer Vorzugsvariante beinhaltet der Schalter Druckplättchen aus Quarzkristallen, die entsprechend dem ersten Ausführungsbeispiel im Ausgang 17, in weiteren Varianten in die Antenne und/oder Energie- und/oder Informationsflußleitungen integriert sind. Die unter Druck (z. B. Fingerdruck) veränderte elektrische Leitfähigkeit der Quarzkristalle bewirkt die Aktivierung des Schaltersystems.

In weiteren Ausführungsvarianten des Schaltersystems sind statt dieses den Fingerdruck aufnehmenden Sensors Sensoren zur Erfassung eines Temperaturgradienten, einer Beschleunigung, der menschlichen Stimme bzw. eines Fingerabdruckes vorgesehen, wodurch das Schaltersystem aktivierbar ist. Eine weitere Ausführungsvariante beinhaltet Kombinationen von mehreren unterschiedlichen Aktivierungen, die gleichzeitig oder quasi gleichzeitig wirksam das Schaltersystem betätigen.

Die Wirkungsweise ist wie folgt:
Von einem externen - nicht gezeichneten - Schreib-/Lesegerät empfängt die Karte 1 mit Hilfe der Antenne 2 ein Signal in Form von hochfrequenten elektromagnetischen Wellen. Diese Wellen dienen einerseits der Energieübertragung und andererseits der Übertragung sowohl des Taktes und verschlüsselter Informationen auf die Karte 1.

Am Ausgang 17 des Hochfrequenz-Interfaces 3 liegt das empfangene Energieund Informationssignal an. Es ist durch das Schaltelement 16 des Schaltersystems wahlweise unterbrechbar, so daß weder der Energie- noch der Informationsanteil des empfangenen Signals den Verarbeitungssystemen (Modulator/Demodulator 7, Eingabe-/Ausgabe-Steuerschaltung 8, Steuerung 9, Mikroprozessor 10, Speicherschaltungen 11) zugeführt werden kann.

Bei aktiviertem Schaltelement 16 wird der Energieanteil des empfangenen Signals über die Energieflußleitung 4 dem Spannungserzeugungssystem 5 zugeführt. Die dort erzeugte elektrische Spannung versorgt über die Weiterführung der Energieflußleitung 4 die Verarbeitungssysteme (7, 8, 9, 10, 11) mit elektrischer Energie.

Bei aktiviertem Schaltelement 16 wird weiterhin der Informationsanteil des empfangenen Signals über die Informationsflußleitung 12 dem Modulator/Demodulator 7 zugeführt, der das Informationssignal demoduliert und digitalisiert. Dieses Signal liegt nun über die Eingabe-/Ausgabe-Steuerschaltung 8 mit Hilfe des Busses 14 an der Steuerung 9 und an dem Mikroprozessor 10 an, wobei die Informationen unter Verwendung der in den Speicherschaltungen 1 gespeicherten Anweisungen bzw. Programme und Daten verarbeitet, ggf. neu gespeichert sowie - bei entsprechender Veranlassung durch die Eingabe-/Ausgabe-Steuerschaltung 8 - wieder dem Modulator/Demodulator 7 zwecks Analogisierung und Modulierung und - sofern das Schaltelement 16 aktiviert ist - über das Hochfrequenz-Interface 3 der Antenne 2 übertragen werden, wo durch die Informationen über elektromagnetische Wellen wieder zum externen Schreib-/Lesegerät gesendet werden.

Mit Hilfe des Schaltelementes 16 des Schaltersystems ist dabei durch den Besitzer der Karte 1 bewußt und wahlweise sowohl die Energieversorgung der Verarbeitungssysteme als auch der Informationsaustausch zwischen diesen und der Antenne 2 der Karte 1 unterbrechbar, so daß weder eine Verarbeitung ggf. von der Antenne 2 empfangener Informationen noch eine Veränderung der Speicherinhalte noch eine Rücksendung von Informationen zu einem Schreib-/Lesegerät möglich sind.

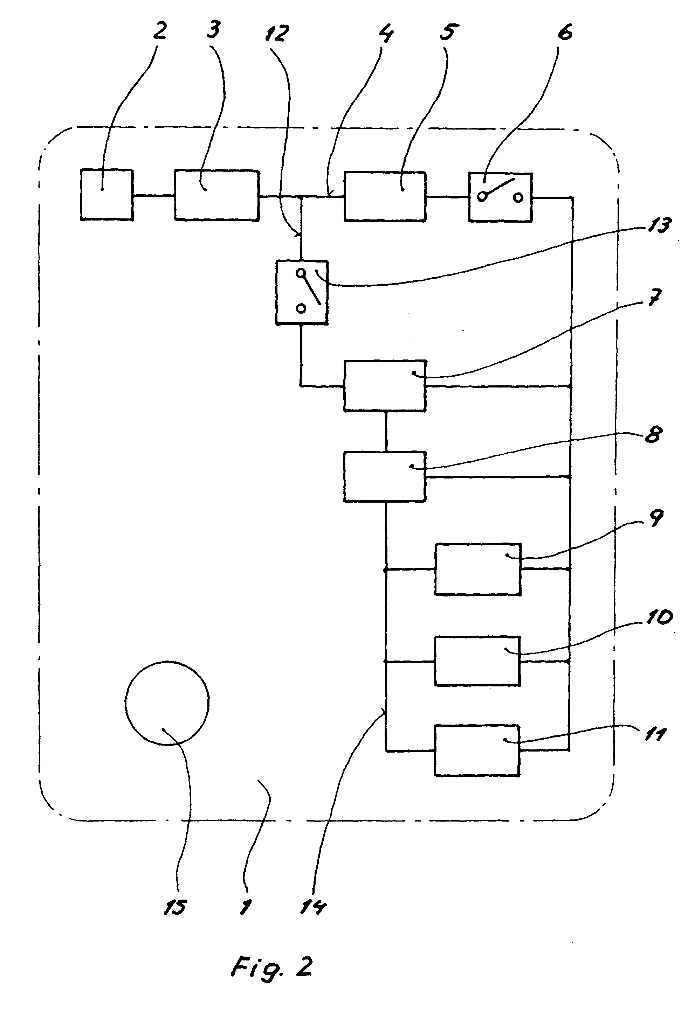

Beim zweiten Ausführungsbeispiel (Fig. 2) ist das Hochfrequenz-Interface 3 ausgangsseitig unmittelbar auf die Energieflußleitung 4 sowie auf die Informationsflußleitung 12 geführt. Ein erstes betätigbares Schaltelement 6 des Schaltersystems ist im Verlauf der Energieflußleitung 4 dem Spannungserzeugungssystem 5 nachgeschaltet, so daß die elektrische Versorgungsspannung für die Verarbeitungssysteme wahlweise unterbrechbar ist.

Ein zweites betätigbares Schaltelement 13 des Schaltersystems ist in der Informationsflußleitung 12 angeordnet, um jeglichen Informationsaustausch zwischen den Verarbeitungssystemen und der Antenne 2 wahlweise zu unterbrechen.

Da beide Schaltelemente 6, 13 durch das Schaltersystem gemeinsam betätigt werden, erfolgt in entsprechender Weise die Unterbrechung sowohl des Energie- als auch des Informationsanteils des empfangenen Signals, so daß eine durch den Besitzer unbemerkte und/oder ungewollte Funktion der Karte 1 unmöglic h ist.

Im übrigen Aufbau entspricht das zweite dem ersten Ausführungsbeispiel mit entsprechender Wirkungsweise.

## Patentansprüche

1. Mobiler, maschinell lesbarer Informationsträger, welcher ohne interne Energiequelle kontaktlos mit Hilfe hochfrequenter elektromagnetischer Wellen zwecks Energie- und bidirektionaler Informationsübertragung mit einem externen Gerät zusammenwirkt und der eine Antenne und ein nachgeschaltetes Interface enthält, welches ausgangsseitig mittels Energieflußleitung über ein Spannungserzeugungssystem auf die Verarbeitungssysteme sowie mittels Informationsflußleitung auf die Verarbeitungssysteme geführt ist, die als Modulations-/Demodulationsschaltung, Eingabe/Ausgabe-Steuerschaltung, Steuerung/Prozessor, Speicherschaltungen ausgeführt sind, **dadurch gekennzeichnet, daß**
im das Energie- und das Informationssignal führenden Ausgang (17) der Antenne (2) bzw. des nachgeschalteten Interfaces (3) ein Schalter (16) angeordnet ist oder in der Energieflußleitung (4) ein Schalter (6) und in der Informationsflußleitung (12) ein Schalter (13) angeordnet ist, wobei die Schalter (6, 13) in der Energie- und Informationsflußleitung nur gemeinsam betätigbar sind, wodurch das Informationssignal wahlweise unterbrechbar ist.

2. Mobiler, maschinell lesbarer Informationsträger nach Anspruch 1, **dadurch gekennzeichnet, daß** das Schaltersystem von außen manuell betätigbar ist.

3. Mobiler, maschinell lesbarer Informationsträger nach Anspruch 1, **dadurch gekennzeichnet, daß** das Schaltersystem (6, 13, 16) durch Sensoren, die auf Temperatur, Bewegung, Druck reagieren oder durch akustische Sensoren aktivierbar ist.

4. Mobiler, maschinell lesbarer Informationsträger nach den Ansprüchen 1 bis 3, **dadurch gekennzeichnet, daß** die Stellung des Schaltersystems (6,13, 16) für den Besitzer erkennbar ist.

## Claims

1. Mobile, machine-readable information carrier, which without internal energy source cooperates without contact with the aid of high-frequency electromagnetic waves for the purpose of energy transmission and bidirectional information transmission with an external device, and which contains an antenna and a downstream interface, that on the output side by means of an energy flow line via a voltage generation system is connected to the processing systems as well as by means of an information flow line to the processing systems, which are designed as modulation/demodulations circuit, input/output control circuit, control system/processor, storage circuits, **characterized in that**
in the energy signal and information signal carrying output (17) of the antenna (2) or the downstream interface (3) a switch (16) is disposed or in the energy flow line (4) a switch (6) and in the information flow line (12) a switch (13) is disposed, whereby the switches (6, 13) in the energy flow line and information flow line can only be jointly actuated, as a result of which the information signal optionally is interruptible.

2. Mobile, machine-readable information carrier according to claim 1, **characterized in that** the switching system can be manually actuated from outside.

3. Mobile, machine-readable information carrier according to claim 1, **characterized in that** the switching system (6, 13, 16) is activable by sensors reacting to temperature, motion, pressure or by acoustic sensors.

4. Mobile, machine-readable information carrier according to claims 1 to 3, **characterized in that** the position of the switching system (6, 13, 16) is recognizable for the owner.

## Revendications

1. Support d'information mobile et susceptible d'être lu par une machine, support qui coopère avec un appareil extérieur sans contact et sans source d'énergie interne à l'aide d'ondes électromagnétiques à haute fréquence, à des fins de transmission d'énergie et d'information bidirectionnelle, et support qui contient une antenne et une interface connectée en aval, interface qui est dirigée du côté de la sortie au moyen d'une conduite de transfert d'énergie via un système de génération de tension vers les systèmes de traitement, et également au moyen d'une conduite de transfert d'informations vers les systèmes de traitement, qui sont réalisés sous la forme de circuit de modulation/démodulation, de circuit de commande d'entrée/sortie, de circuit de commande, de processeur, de circuit de mémoire, **caractérisé en ce que**, sur la sortie (17) conduisant l'énergie et le signal d'information de l'antenne (2) ou de l'interface (3) connectée en aval, est disposé un interrupteur (16) ou bien est disposé sur la conduite (4) de transfert d'énergie un interrupteur (6) et sur la conduite (12) de transfert d'information un interrupteur (13), les interrupteurs (6, 13) sur la conduite de transfert d'énergie et d'information étant susceptibles d'être actionnés seulement en commun, de sorte que le signal d'information soit susceptible d'être interrompu au choix.

2. Support d'information mobile et susceptible d'être lu par une machine selon la revendication 1, **caractérisé en ce que** le système d'interrupteurs est susceptible d'être actionné manuellement de l'extérieur.

3. Support d'information mobile et susceptible d'être lu par une machine selon la revendication 1, **caractérisé en ce que** le système d'interrupteurs (6, 13, 16) est susceptible d'être activé par des capteurs qui réagissent à la température, au déplacement, à la pression ou bien est susceptible d'être activé par des capteurs acoustiques.

4. Support d'information mobile et susceptible d'être lu par une machine selon les revendications 1 à 3, **caractérisé en ce que** la position du système d'interrupteurs (6, 13, 16) est reconnaissable par le propriétaire.
